# FASCICULE DE BREVET EUROPEEN

(11) **EP 0 511 053 B1**
(45) Date de publication et mention de la délivrance du brevet: **22.06.1994**
(21) Numéro de dépôt: 92401067.1
(22) Date de dépôt: 16.04.1992
(51) Int. Cl.: E02B 17/00, F16B 7/00

(54) **Renforcement d'un assemblage tubulaire**
Verstärkung einer Rohrverbindung
Reinforcement of a tube assembly

(30) Priorité: 19.04.1991 FR 9104839
(43) Date de publication de la demande: 28.10.1992
(73) Titulaire: ELF AQUITAINE PRODUCTION, 92400 Courbevoie (FR)
(72) Inventeur: Jullien, Jean-François, F-01360 Beligneux (FR); Renault, Jean-Pierre, F-64000 Pau (FR); Tra Bi, Yrie Denis, Abidjan 01 (CI)
(74) Mandataire: Timoney, Ian Charles Craig

(56) Documents cités:
- FR-A- 2 388 634

## Description

La présente invention se rapporte à un renforcement d'un assemblage tubulaire et plus particulièrement à un tel renforcement destiné à être utilisé sur une structure tubulaire telle qu'une plate-forme pétrolière en mer.

Une plate-forme pétrolière est soumise, par l'effet de la houle, à des sollicitations répétées qui créent des contraintes dans sa structure métallique. Ces sollicitations tendent à créer des fissures de fatigue qui prennent naissance en pied de cordon ou dans la région de chaque noeud entre deux éléments tubulaires, zones à forte concentration de contraintes. Les fissurent se propagent, sous l'effet des sollicitations, pour devenir des fissures ouvertes, puis traversantes. A ce stade, elles peuvent conduire à la rupture du noeud, par cisaillement de la paroi de la membrane le long du cordon ou par rupture de l'entretoise, suivant la position de la fissure.

La présence d'une fissure en pied de cordon modifie le mode de transfert des sollicitations entre les éléments de la structure métallique et amplifie les taux de contraintes dans cette région. Ceci résulte en une accélération de la propagation de la fissure.

Il est donc nécessaire de prévoir un moyen de réparer ou de renforcer un tel assemblage tubulaire fissuré. On a déjà proposé de renforcer des assemblages fissurés en construisant un cadre métallique autour du joint. Ce type de renforcement présente des inconvénients sur une plate-forme en mer où le travail doit se faire sous l'eau car un tel cadre est long à installer par des plongeurs. De plus, un cadre métallique est sujet à la corrosion, surtout dans un milieu agressif comme l'eau de mer.

Le FR-A- 2 388 634 concerne en particulier le renforcement des soudures entre éléments tubulaires de plates-formes maritimes dans lesquelles les soudures sont soumises à des efforts périodiques de traction, par l'application d'une contrainte de compression sur lesdites soudures.

La présente invention a pour objet un renforcement d'un assemblage tubulaire qui est simple et de fiabilité accrue.

Pour ce faire, l'invention propose le renforcement d'un assemblage tubulaire, l'assemblage tubulaire comportant au moins deux éléments tubulaires reliés ensemble, caractérisé en ce que les éléments tubulaires sont emplis de produit durcissable au voisinage de leur zone de jonction et en ce que le renforcement comprend de plus un moyen d'ancrage dont une extrémité est montée fixe dans le produit durcissable disposé à l'intérieur d'un élément tubulaire et dont l'autre extrémité prend appui sur la paroi externe de l'autre élément tubulaire, le moyen d'ancrage étant sous une tension prédéterminée.

Selon un mode de réalisation préféré, le moyen d'ancrage comprend un boulon.

Le renforcement selon l'invention peut s'adapter à tout type d'assemblage tubulaire, fissuré ou non.

D'autres caractéristiques et avantages de la présente invention apparaîtront plus clairement à la lecture de la description ci-après faite en référence au dessin annexé sur lequel :
- la figure 1 est une vue schématique d'un assemblage tubulaire ; et
- la figure 2 est une vue analogue montrant le renforcement d'un tel assemblage.

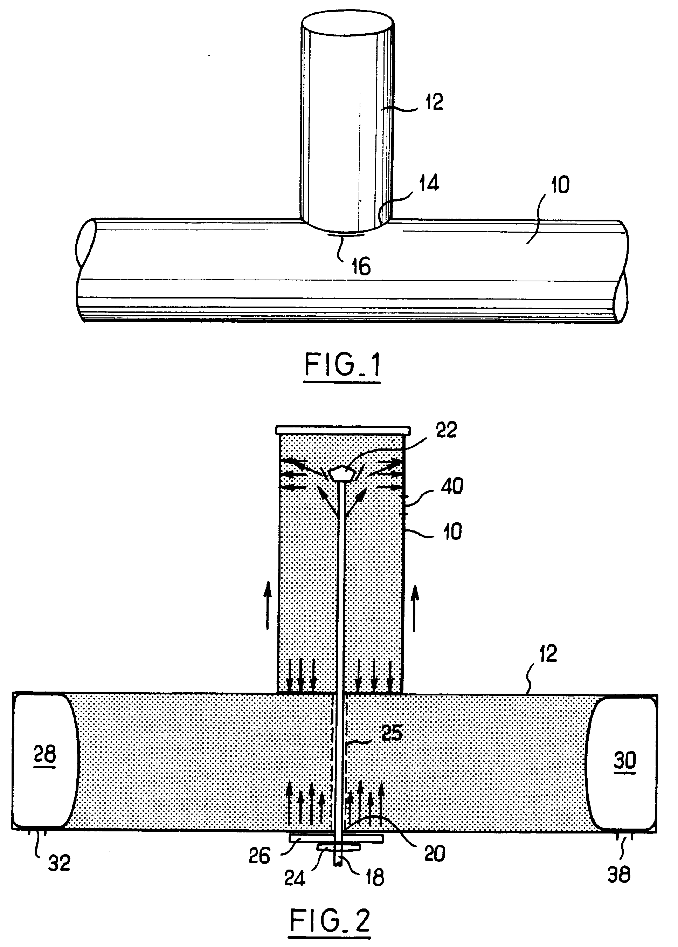

Sur la figure 1 est représentée une partie d'une structure tubulaire, par exemple une plate-forme pétrolière en mer, qui comprend un premier élément tubulaire 10 en métal qui est relié à un deuxième élément tubulaire 12 par une soudure 14.

L'assemblage formé des deux éléments tubulaires 10 et 12 comporte dans l'exemple illustré une fissure 16 qui s'étend généralement parallèlement à la soudure 14 sur une partie de la longueur de celle-ci.

Sur la figure 2 est représenté le renforcement de l'assemblage tubulaire fissuré de la figure 1. Un moyen d'ancrage qui, dans l'exemple illustré est un boulon 18 est monté à l'intérieur de l'élément tubulaire 12 par une ouverture 20, formée préalablement dans l'élément tubulaire 12, et comprend une coquille à expansion 22 disposée à son extrémité et se trouvant à l'intérieur de l'élément tubulaire 10. L'extrémité du boulon d'ancrage 18 qui fait saillie à l'extérieur de l'élément tubulaire 12 est filetée et porte un écrou fileté 24 qui prend appui sur l'élément tubulaire 12 par l'intermédiaire d'un élément d'appui 26.

Un manchon 25 en matière plastique dont la fonction sera décrite plus en détail ci-après, est disposé autour du boulon d'ancrage 18 dans l'élément tubulaire 12.

Une fois que le boulon d'ancrage 18 a été mis en position, il est retenu en place par des cales (non représentées).

Ensuite, deux ballons gonflables 28 et 30 sont insérés à l'intérieur de l'élément tubulaire 12 par deux ouvertures associées 32 et 38 formées dans la paroi de celui-ci et sont mis sous pression. Les ballons 28, 30, après avoir été gonflés, forment un coffrage délimitant entre eux un volume prédéterminé de l'élément tubulaire 12, volume qui est sensiblement étanche. L'intérieur de l'élément tubulaire 10 ainsi que le volume défini entre les ballons 28 et 30 sont remplis de ciment liquide ou d'un mortier à base de liant hydraulique par une ouverture 40 formée, dans l'exemple illustré, dans la partie supérieure de l'élément tubulaire 10.

Après la prise du ciment, on procède au serrage puis au sertissage de l'écrou fileté 24 sur le boulon d'ancrage 18. Ceci a pour effet de faire expanser la coquille 22, assurant ainsi une bonne prise du boulon d'ancrage 18 dans le ciment, et de mettre sous tension ce boulon 18. La présence du manchon 25 empêche le ciment d'adhérer à la surface du boulon l'ancrage 18, lui laissant un certain degré de mouvement à l'intérieur du ciment disposé dans l'élément tubulaire 12. La mise sous tension du boulon d'ancrage 18 crée des contraintes dans les éléments tubulaires 10, 12 ainsi que dans le ciment comme représenté par les flèches de la figure 2.

La présence du ciment à l'intérieur de l'élément tubulaire l'empêche de se déformer sous les contraintes générées par le boulon d'ancrage 18. L'expansion de la coquille 22 a pour effet de fretter l'anneau de ciment, situé à la hauteur de la coquille, contre la paroi interne de l'élément tubulaire 10. Cet anneau fretté devient le point de passage d'une partie des efforts qui est alors reprise par butée sur la paroi externe de l'élément tubulaire 12. La précontrainte appliquée au boulon est déterminée en fonction de la charge maximale que devra supporter l'assemblage.

Etant donné que la fissure 16 réduit la section de transit des efforts, la présente invention rend possible la reprise, par l'intermédiaire du ciment disposé à l'intérieur des éléments tubulaires 10, 12, d'une partie des sollicitations, de traction et de compression, subie par l'assemblage.

L'interface entre les éléments tubulaires 10, 12 et le ciment permet, ainsi, le transfert des efforts entre les deux éléments tubulaires 10 et 12.
On peut faire en sorte que le ciment disposé dans l'élément tubulaire 12 reste en un seul bloc en prévoyant d'installer des armatures (non représentées) dans le ciment avant son durcissement.

On peut également utiliser le renforcement selon la présente invention pour d'autres formes d'assemblage, par exemple en forme d'Y, ou comportant plusieurs éléments tubulaires.

Le renforcement selon l'invention peut s'adapter à tout type d'assemblage tubulaire, fissuré ou non. Il peut s'adapter aux structures tubulaires neuves afin d'en augmenter leur résistance aux contraintes.

On peut éventuellement disposer un coffrage dans le premier élément tubulaire 10.

## Revendications

1. Renforcement d'un assemblage tubulaire, l'assemblage tubulaire comportant au moins deux éléments tubulaires (10, 12) reliés ensemble, caractérisé en ce que les éléments tubulaires (10, 12) sont emplis de produit durcissable au voisinage de leur zone de jonction et en ce que le renforcement comprend de plus un moyen d'ancrage (18) dont une extrémité (22) est montée fixe dans le produit durcissable disposé à l'intérieur d'un élément tubulaire (10) et dont l'autre extrémité (18) prend appui sur la paroi externe de l'autre élément tubulaire (12), le moyen d'ancrage (18) étant sous une tension prédéterminée.

2. Renforcement selon la revendication 1 caractérisé en ce que le moyen d'ancrage comprend un boulon (18).

3. Procédé de renforcement d'un assemblage tubulaire, l'assemblage tubulaire comportant au moins deux éléments tubulaires (10, 12) reliés ensemble, le procédé comportant les étapes suivantes :
- disposition d'un d'ancrage (18) à l'intérieur de l'assemblage de manière que l'une de ses extrémités se trouve à l'intérieur d'un élément tubulaire (10), et que l'autre extrémité prenne appui sur la paroi externe de l'autre élément tubulaire (12),
- remplissage de l'intérieur des deux éléments tubulaires (10, 12), au voisinage de leur zone de jonction, à l'aide d'un produit durcissable,
- après durcissement du produit, mise sous tension prédéterminée du moyen d'ancrage (18) afin de faire passer les efforts entre les éléments tubulaires (10, 12) par l'intermédiaire du produit durci.

4. Procédé selon la revendication 3 caractérisé en ce que l'on dispose un coffrage (28, 30) à l'intérieur d'au moins un élément tubulaire (12) afin de définir un volume prédéterminé à emplir.

## Patentansprüche

1. Verstärkung einer Rohrverbindung, wobei die Rohrverbindung wenigstens zwei miteinander verbundene Rohrelemente (10, 12) aufweist, dadurch gekennzeichnet, daß die Rohrelemente (10, 12) in der Nähe ihres Verbindungsbereiches mit einem aushärtbaren Produkt gefüllt sind und daß die Verstärkung darüber hinaus eine Verankerungseinrichtung (18) aufweist, deren eines Ende (22) fest in dem aushärtbaren Produkt angebracht ist, das in dem Inneren eines Rohrelements (10) angeordnet ist, und deren anderes Ende (18) auf der Außenwand des anderen Rohrelements (12) aufliegt, wobei die Verankerungseinrichtung (18) unter einer vorgegebenen Spannung steht.

2. Verstärkung nach Anspruch 1, dadurch gekennzeichnet, daß die Verankerungseinrichtung einen Bolzen (18) aufweist.

3. Verfahren zur Verstärkung einer Rohrverbindung, die wenigstens zwei miteinander verbundene Rohrelemente (10, 12) aufweist, wobei das Verfahren die folgenden Schritte umfaßt:
- Anordnung einer Verankerung (18) im Inneren der Verbindung, derart, daß sich eines ihrer Enden im Inneren eines Rohrelements (10) befindet und daß das andere Ende auf der Außenwand des anderen Rohrelements (12) aufliegt,
- Ausfüllen des Inneren der beiden Rohrelemente (10, 12) in der Nähe ihres Verbindungsbereichs mit einem aushärtbaren Produkt,
- die Verankerungseinrichtung (18) nach dem Aushärten des Produktes unter eine vorgegebene Spannung setzen, um die Kräfte zwischen den Rohrelementen über das ausgehärtete Produkt zu übertragen.

4. Verfahren nach Anspruch 3, dadurch gekennzeichnet, daß eine Schalung (28, 30) im Inneren wenigstens eines Rohrelementes (12) angeordnet ist, um ein zu füllendes vorgegebenes Volumen zu bilden.

## Claims

1. Reinforcement for a tubular assembly, the tubular assembly comprising at least two tubular elements (10, 12) connected to one another, characterised in that the tubular elements (10, 12) are filled with a settable product in the vicinity of their connection area; and in that the reinforcement furthermore comprises an anchoring means (18), one end (22) of which is mounted in a secured manner in the settable product disposed in the interior of a tubular element (10), and the other end (18) of which is supported on the external wall of the other tubular element (12), the anchoring means (18) being under a predetermined tension.

2. Reinforcement according to Claim 1, characterised in that the anchoring means comprise a bolt (18).

3. Process for reinforcing a tubular assembly, the tubular assembly comprising at least two tubular elements (10, 12) connected to one another, the process comprising the following steps:
- the arrangement of an anchoring means (18) in the interior of the assembly in such a manner that one of the ends thereof is located in the interior of a tubular element (10), and the other end thereof is supported on the external wall of the other tubular element (12);
- filling the interior of the two tubular elements (10, 12) in the vicinity of their connection area with a settable product; and
- after setting the product, subjecting the anchoring means (18) to predetermined tension in order to transfer the forces between the tubular elements (10, 12) by the intermediary of the set product.

4. Process according to Claim 3, characterised in that a mould (28, 30) is arranged in the interior of at least one tubular element (12) in order to define a predetermined volume to be filled.
